Europäisches Patentamt

European Patent Office

Office européen des brevets

(11) Veröffentlichungsnummer: **0 451 749 A2**

# EUROPÄISCHE PATENTANMELDUNG

(21) Anmeldenummer: 91105501.0

(22) Anmeldetag: 08.04.91

(51) Int. Cl.⁵: **B61F 5/10**, B61F 5/30, F16F 9/05

(30) Priorität: 10.04.90 DE 4011517

(43) Veröffentlichungstag der Anmeldung: 16.10.91 Patentblatt 91/42

(84) Benannte Vertragsstaaten: AT BE CH DE ES FR GB IT LI NL SE

(71) Anmelder: **Continental Aktiengesellschaft Königsworther Platz 1, Postfach 1 69 W-3000 Hannover 1(DE)**

(72) Erfinder: **Hoppmann, Friedrich Marthastrasse 2 W-3000 Hannover 81(DE)**

(54) **Luftfederbalg für Schienenfahrzeuge.**

(57) Ein Luftfederbalg für die Abstützung eines Wagenkastens eines Schienenfahrzeuges auf Drehgestellen ist als Halbbalg oder Gürtelrollbalg ausgebildet. Der Luftfederbalg weist an starren Anschlagringen der gegeneinander abgefederten Fahrzeugteile eingespannte Ringwulste auf. Der untere Ringwulst liegt in druckdichter Verspannung von außen am Anschlagring des Drehgestells an. Um die Lebensdauer eines derartigen Luftfederbalges zu erhöhen, ist der untere Ringwulst (19) am Anschlagring (27) des Drehgestells (15) fest anvulkanisiert.

FIG. 1

EP 0 451 749 A2

Die Erfindung betrifft einen Luftfederbalg für die Abstützung eines Wagenkastens eines Schienenfahrzeuges auf Drehgestellen, der als Halbbalg oder Gürtelrollbalg ausgebildet ist und an starren Anschlagringen der gegeneinander abgefederten Fahrzeugteile eingespannte Ringwulste aufweist, von denen der untere Ringwulst am Anschlagring des Drehgestells in druckdichter Verspannung von außen anliegt.

Im Unterschied zu Kraftfahrzeugluftfedern haben die Schienenfahrzeugluftfedern besondere Anforderungen zu erfüllen.

Luftfederbälge für Schienenfahrzeuge müssen neben den vertikalen Federbewegungen auch horizontale und torsionale Bewegungen aufnehmen. Die Luftfedern müssen bei Kurvenfahrten große seitliche Bewegungen ausführen. Dieses ist für die Konstruktion der Drehgestelle von Vorteil, weil wiegenlose Drehgestelle eingesetzt werden können. Durch die Ausdrehung der Drehgestelle beim Durchfahren von Kurven treten in horizontaler Richtung durchaus Bewegungen von 120 mm auf. Gleichzeitig unterliegen die Luftfedern einer Verdrehung als Folge der Drehbewegungen der Drehgestelle beim Durchfahren von Kurven.

Um diesen Anforderungen gerecht zu werden, werden heute vielfach Halbbälge oder Gürtelrollbälge als Luftfedern für Schienenfahrzeuge verwendet.

Der besondere Vorteil der Halbbälge besteht in der großen seitlichen Beweglichkeit. Der äußere ringförmige Wulst wird mittels eines Befestigungsringes an Platten bzw. Abstützkonsolen oder einen Anschlagring des Wagenkastens geschraubt. Der innere Ringwulst wird auf einen Dichtkonus eines am Drehgestell befestigten Anschlagringes gepreßt.

Es wurde festgestellt, daß die kritische Zone für die Haltbarkeit des Luftfederbalges am in der Praxis gewöhnlich als "Felgenhorn" bezeichneten starren Vorsprung des Anschlagringes der unteren Einspannung am Drehgestell vorliegt. Durch die Ausdrehbewegungen entsteht am Federbalg im Bereich des Felgenhornes eine Abriebstelle, die zu einer Zerstörung des Luftfederbalges führen kann.

Es ist bekannt, im Bereich der oberen Einspannung des Luftfederbalges Stützglocken zur Beeinflussung der Federkennlinien anzubringen, die von oben auf den Luftfederbalg wirken. Wenn die Stützglocken auf dem Luftfederbalg anliegen, wird eine harte Luftfeder erreicht. Das bedeutet eine Erhöhung der aufzubringenden Kräfte bei Kurvenfahrten, um die Drehgestelle gegenüber dem Wagenkasten zu drehen. Dieses führt ebenfalls zu ungleichförmigen Belastungen des Luftfederbalges im Bereich des Felgenhornes.

Um hier eine Verbesserung zu schaffen, ist es bekannt (Zeitschrift "Leichtbau der Verkehrsfahrzeuge", 15.Jahrgang, Heft 5, September/Oktober 1971, Seite 160) die Gewebeschlingen um den Kernring im Ringwulst umzudrehen und somit günstigere Einspannverhältnisse des Gewebes am Felgenhorn bzw. Anschlagring zu erreichen. Dabei ist es aus der DE-PS 21 08 694 weiter bekannt, dem den Ringwulst verstärkenden Kernring eine längliche, abgerundete Querschnittsgestalt zu geben.

Der Erfindung liegt die Aufgabe zugrunde, einen Luftfederbalg der eingangs geschilderten Art zu schaffen, der sich durch eine weitere Verbesserung seiner Lebensdauer auszeichnet.

Die Aufgabe wird erfindungsgemäß dadurch gelöst, daß der untere Ringwulst am Anschlagring des Drehgestells fest anvulkanisiert ist.

Die Einspannstelle des Luftfederbalges stellt eine verschraubungsfreie Einspannung dar. Das Ende des Luftfederbalges mit der Ringwulst ist an dem Metallteil des Anschlagringes anvulkanisiert.

Vorteilhafte Ausbildungen der Erfindung werden in den Unteransprüchen gekennzeichnet.

Durch die feste Verbindung von Balgende und dem einen Felgensitz bildenden Anschlagring werden alle Bewegungen zwischen der Balgoberfläche und dem Metallteil in der Berührungszone unterdrückt. Dadurch kann in diesem Bereich kein Abrieb erfolgen. Die auftretenden Verformungen werden über das elastische Material abgebaut, ohne daß ein Rutschen der Balgoberfläche auf dem Anschlagring stattfindet.

Anhand der Zeichnung werden nachstehend einige Ausführungsbeispiele der Erfindung näher erläutert. Es zeigt .

Fig. 1     im Halbschnitt einen zwischen Wagenkasten und Drehgestell eingespannten Halbbalg,

Fig. 2     einen zwischen Wagenkasten und Drehgestell eingespannten Gürtelrollbalg,

Fig. 3     bis 6 verschiedene Ausbildungsformen der unteren, am Drehgestell liegenden Einspannstelle eines Halbbalges oder Gürtelrollbalges.

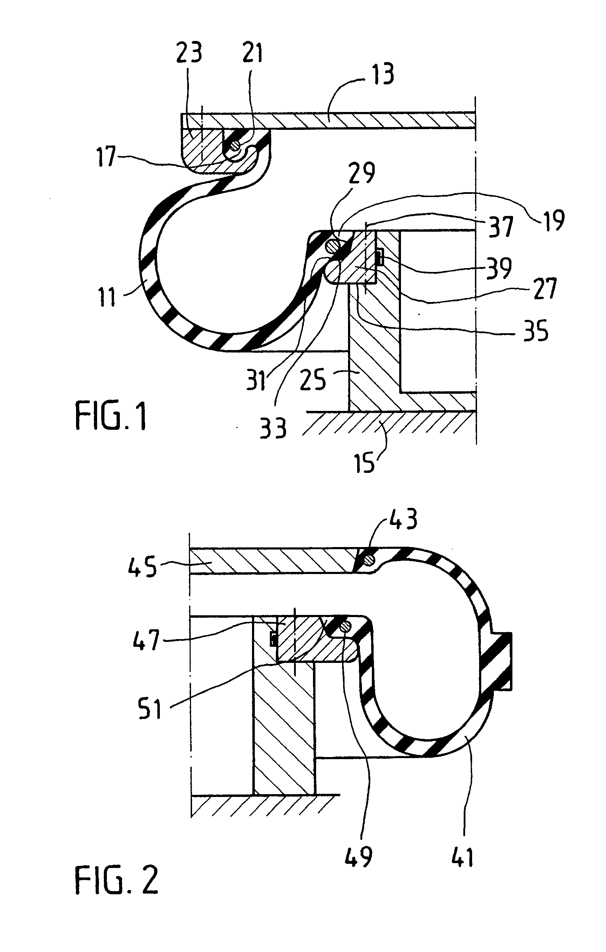

Der in der Fig. 1 dargestellte Luftfederbalg 11 ist als Halbbalg ausgebildet und zwischen einem Wagenkasten 13 und einem Drehgestell 15 eines Eisenbahnwagens eingesetzt. Der Luftfederbalg 11 ist aus Gummi oder gummiähnlichen Kunststoffen mit eingebetteten Verstärkungseinlagen in Form von Geweben oder parallel zueinander verlaufenden Einzeldrähten aufgebaut. In seinen beiden Ringwulsten 17 und 19 ist jeweils ein Kernring 21 eingebettet. Die obere, größere Ringwulst 17 ist mittels eines Befestigungsringes 23 an einer Abstützkonsole 13 des Wagenkastens befestigt.

Das hier nicht weiter dargestellte Drehgestell ist wiegenlos ausgebildet, so daß der Halbbalg 11 eine seitliche Auslenkung von ca. 120 mm zulassen muß. Auf dem Drehgestell ist ein zylindrischer Stützkörper 25 befestigt, der einen starren, metallischen Anschlagring 27 trägt, gegen den sich der kleinere Ringwulst 19 des Federbalges 11 in druckdichter Verspannung von außen anlegt. Dazu weist der Anschlagring 27 eine konische Dichtfläche 29 auf. Auf dem horizontal nach außen springenden Felgenhorn 31 liegt die dem Hauptkörper des Luftfederbalges 11 zugewandte Ringfläche 33 des Ringwulstes 19. Das Felgenhorn 31 ist an seinem Umfang abgerundet und wird von der Balgwand berührt.

Dort, wo der Ringwulst 19 und die Balgwand den Anschlagring 27 berühren, sind sie an diesem anvulkanisiert.

Der Anschlagring 27 ist auf einem ringförmigen Absatz 35 des Stützkörpers 25 mittels axial angeordneten Schrauben 37 befestigt und über einen oförmigen Dichtungsring 39 gegen den Stützkörper 25 abgedichtet.

In Fig. 2 wird ein zwischen Wagenkasten und Drehgestell eingespannter Gürtelrollbalg 41 schematisch dargestellt. Der obere, am Wagenkasten befestigte Ringwulst 43 sitzt felgenartig an einem entsprechend ausgebildeten Dichtkonus einer am Wagenkasten befestigten Abstützplatte 45. Der Anschlagring 47 des Drehgestells ist in ähnlicher Weise ausgebildet wie der Anschlagring 27 gemäß Fig. 1. Der mit einem Kernring 49 versehene Ringwulst 51 liegt in dichter Verspannung auf dem Felgensitz des Anschlagringes 47 und ist in seinen Berührungsflächen an dem konischen Dichtungssitz und dem Felgenhorn fest anvulkanisiert, an dem auch der berührende Teil der Balgwand des Gürtelrollbalges 41 anvulkanisiert ist.

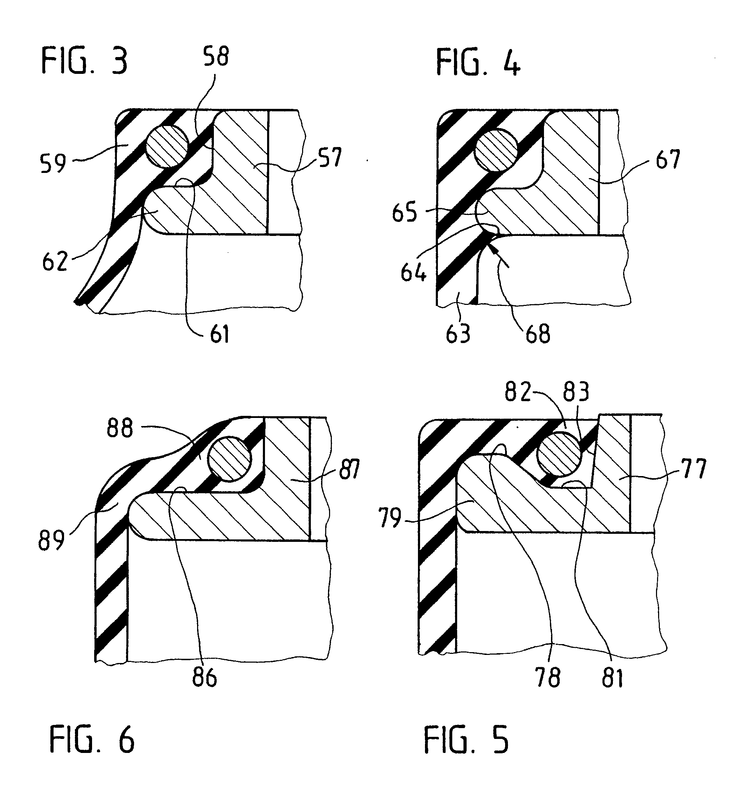

Der in der Fig. 3 gezeigte Anschlagring 57 weist eine senkrechte Dichtungsfläche 58 für den Felgensitz des Luftfederbalgendes in der Einspannstelle am Drehgestell auf. Die Erhebungen des Ringwulstes 59 sind an der senkrechten Dichtungsfläche 58 und auf der horizontalen Fläche 61 des vorspringenden Felgenhornes 62 anvulkanisiert ebenso wie die am Umfang des Felgenhornes 61 anliegende Oberfläche des Luftfederbalgendes.

In der Ausbildung nach Fig. 4 weist der Luftfederbalg 63 einen umlaufenden Ringansatz 64 auf, der unter das Felgenhorn 65 greift. Auch dieser umlaufende Ringansatz 64 ist am Anschlagring 67 fest anvulkanisiert. Der Übergang von Ringansatz 64 zur Luftfederbalgwand ist mit einem Radius 68 versehen, um Spannungsspitzen in der Befestigungsstelle zu verringern. Durch diese Ausbildung wird die Berührungszone zwischen Anschlagring 67 und Luftfederbalg 63 weiter heruntergezogen. Es wird eine größere Abstützung bei den Balgbewegungen erzielt.

In der Fig. 5 weist der Anschlagring 77 auf der horizontalen Ringfläche 78 des Felgenhornes 79 eine Vertiefung 81 zur Aufnahme des entsprechend ausgebildeten Ringwulstes 82 auf, der mit seiner Stirnfläche gegen die konische Dichtfläche 83 des Anschlagringes 77 anliegt. Der in Richtung horizontale Fläche 78 des Anschlagringes 77 vorspringende Ringwulst 82 ergibt eine vorteilhafte Platzersparnis in vertikaler Richtung. Der Ringwulst 82 und die am Felgenhorn 79 anliegende Oberfläche des Luftfederbalgendes sind am Anschlagring 77 und an dessen Felgenhorn fest anvulkanisiert.

Die Ausbildung in Fig. 6 zeigt eine ebene Ringfläche 86 des Anschlagringes 87. Der Ringwulst 88 weist in das Balginnere und ist an den Flächen des Anschlagringes 87 fest anvulkanisiert, ebenso wie das sich anschließende Ende des Luftfederbalges 89, das den Anschlagring 87 an dessen Felgenhorn berührt.

In die Ringwulste sind verschiedenartige Kernringe einsetzbar. Die Kernringe können unterschiedliche Querschnitte und unterschiedlichen Aufbau bzw. aus unterschiedlichen Werkstoffen bestehen.

## Patentansprüche

1. Luftfederbalg für die Abstützung eines Wagenkastens eines Schienenfahrzeuges auf Drehgestellen, der als Halbbalg oder Gürtelrollbalg ausgebildet ist und der an starren Anschlagringen der gegeneinander abgefederten Fahrzeugteile eingespannte Ringwulste aufweist, von denen der untere Ringwulst am Anschlagring des Drehgestells in druckdichter Verspannung von außen anliegt,
**dadurch gekennzeichnet,**
daß der untere Ringwulst (19) am Anschlagring (27) des Drehgestells (15) fest anvulkanisiert ist.

2. Luftfederbalg nach Anspruch 1, dadurch gekennzeichnet, daß die den Anschlagring (27; 47) berührende Balgwand des an den unteren Ringwulst (19; 51) anschließenden Luftfederbalgendes fest anvulkanisiert ist.

3. Luftfederbalg nach Anspruch 1 oder 2, dadurch gekennzeichnet, daß der Anschlagring (67) an der unteren Fläche eines vorspringenden Felgenhorns (65) von einem umlaufenden Ringansatz (64) des Luftfederbalges (63) umfaßt wird, und daß dieser Ringansatz (64) am Felgenhorn (65) fest anvulkanisiert ist.

4. Luftfederbalg nach einem der Ansprüche 1 bis 3, dadurch gekennzeichnet, daß der Anschlagring (77) auf der durch das vorspringende Felgenhorn (79) gebildeten horizontalen Ringfläche (78) eine Vertiefung (81) zur Aufnahme des Ringwulstes (82) aufweist, wobei der Ringwulst (82) in dieser Vertiefung (81) und die am Felgenhorn (79) anliegende Balgwand fest anvulkanisiert sind.

FIG.1

FIG. 2

FIG. 3

58

59

57

62

61

FIG. 4

65

64

67

63    68

88

89

87

86

FIG. 6

82   83

79

77

78    81

FIG. 5